# EUROPEAN PATENT APPLICATION

(11) **EP 0 884 357 A1**
(43) Date of publication of application: **16.12.1998**
(21) Application number: 98110539.8
(22) Date of filing: 09.06.1998
(51) Int. Cl.: C08L 23/16, C08L 23/10, H01M 4/14, H01M 2/02

(54) **Polypropylene compositions grafted with functionalized vinylpolybutadienes**

(30) Priority: 12.06.1997 IT MI971380
(71) Applicant: Montell Technology Company bv, 2132 MS Hoofddorp (NL)
(72) Inventor: Addeo, Antonio, 28100 Novara (IT); D'Oria, Francesco, 20133 Milano (IT); Mostarda, Franco, 21100 Varese (IT); Garagnani, Enea, 44100 Ferrara (IT)
(74) Representative: Zanoli, Enrico

(57) **Abstract**

The present invention relates to heterophasic polyolefin compositions comprising from 10 to 60 parts of a xylene-insoluble fraction (A) and from 40 to 90 parts of a xylene-soluble fraction (B), grafted with specific polybutadienes containing -Si(OR)₃ groups in which R is a hydrocarbon radical having from 1 to 5 carbon atoms. The said compositions have excellent adhesive properties and stability properties in acidic medium, and are particularly suitable for use in the field of Pb-acid type dipolar batteries.

## Description

The present invention relates to heterophasic polyolefin compositions grafted with polybutadienes functionalized with polar groups, these compositions having excellent properties in terms of adhesiveness and stability. The present invention also relates to a process for preparing the said compositions.

In particular, the present invention relates to heterogeneous polyolefin compositions grafted with polybutadienes containing polar functional groups, the said compositions comprising a xylene-insoluble fraction (A) and a xylene-soluble fraction (B).

It is known that, given their relative chemical inertness, non-functionalized heterogeneous polyolefin compositions generally do not have good adhesive properties, in particular with regard to metal surfaces.

Polyolefin compositions are known, for example, from European patent application EP 472,946, comprising:
(a) 10-50 parts by weight of a propylene homopolymer or copolymer containing more than 80% by weight of propylene and having an isotactic index of greater than 80;
(b) 5-20 parts by weight of an ethylene copolymer which is insoluble in xylene at room temperature;
(c) 40-80 parts by weight of a copolymer containing ethylene, propylene and optionally another α-olefin, containing less than 40% by weight of ethylene; the said copolymer being soluble in xylene at room temperature and having an intrinsic viscosity of between 1.5 and 4. Although these compositions have excellent properties in terms of flexibility, transparency and impact strength, they do not have equally good adhesive properties, in particular towards metal surfaces.

In order to improve this type of property in polyolefin polymers, the method generally adopted is to functionalize these polymers with compounds containing polar groups.

A process for obtaining manufactured metal articles coated with polyolefin material is known from European patent application EP-A-603,906, this process comprising coating the metal surfaces with polyolefin compositions comprising:
1) 30-94% of a propylene homo- or copolymer;
2) 0-70% of an olefin elastomer, which can also comprise heterogeneous compositions consisting of a crystalline polypropylene matrix and an amorphous dispersed phase;
3) 0.5-10% of a polypropylene modified with polar groups such as maleic anhydride or acrylic acid. However, in order to obtain acceptable results in terms of adhesiveness, polyolefin compositions need to have a melt index of from 15 to 150 g/10 min and a specific particle size distribution.

It is also known that although it increases the adhesiveness of polyolefin polymers, functionalization with polar groups also generally increases their reactivity, as a result of which stability problems may be encountered for some functionalized compositions when they are used under conditions of high reactivity. A particular example consists of the field of Pb-acid type dipolar batteries, in which the plastic materials used to make, for example, the electrode holders are in constant contact, at high temperatures, with solutions of markedly acidic pH.

It is also known from European patent application EP-A-542,253 to graft polybutadienes, having at least 10% of 1-2 structure and optionally containing polar groups, onto crystalline propylene (co)polymers by a conversion process carried out in the presence of non-peroxide radical initiators. Only 1,2-polybutadiene grafts not containing polar groups, on polypropylene homopolymer or random copolymers are reported in the examples of the said patent application. The branching introduced onto the chain make it possible to obtain polymers with improved fluidity and good impact strength. However, the adhesive properties of the compositions are not considered, nor is the possibility mentioned of modifying crystalline polymers so as to increase their adhesiveness.

It is thus seen that there is still a need for polyolefin compositions which have excellent properties of adhesion to metal surfaces and at the same time good stability even under harsh processing conditions.

It has now been found, unexpectedly, that heterophasic polyolefin compositions, comprising a xylene-insoluble fraction (A) and a xylene-soluble fraction (B), grafted with specific polybutadienes containing -Si-(OR)₃ groups have the abovementioned adhesiveness and stability properties. In particular, an object of the present invention is to provide heterophasic polyolefin compositions comprising:
(A) 10-60 parts by weight of a fraction which is insoluble in xylene at room temperature (25°C), comprising a propylene homopolymer and/or a copolymer of propylene with ethylene and/or another α-olefin CH₂=CHR^{I}, where R^{I} is an alkyl radical having 2-10 carbon atoms, containing more than 85% by weight of propylene-derived units; and
(B) 40-90 parts by weight of a fraction which is soluble in xylene at room temperature, comprising (preferably consisting of) a predominantly amorphous copolymer of propylene with ethylene and/or another α-olefin CH₂=CHR^{I}, where R^{I} has the meaning described above, optionally containing small amounts of a diene, containing more than 15% by weight of ethylene-derived units; the said compositions being characterized in that they are grafted with polybutadienes containing -Si(OR)₃ groups in which R is a hydrocarbon radical having from 1 to 5 carbon atoms.

The heterophasic polyolefin compositions can be expediently prepared by sequential polymerization, working in at least two stages; in a first stage a crystalline propylene homopolymer and/or copolymer with an isotactic index of greater than 85 is prepared, and in a second stage mixtures of ethylene, propylene and/or an α-olefin CH₂=CHR^{I} are polymerized to give a predominantly amorphous copolymer. Alternatively, they can be obtained by mixing the components (A) and (B) mechanically, for example in a high-shear mixer.

Preferably, the xylene-insoluble fraction (A) is a propylene homopolymer and/or a copolymer of propylene, preferably with ethylene, containing more than 90% by weight of propylene-derived units. The amount of the fraction (A) is preferably of from 20 to 50 parts by weight, more preferably from 30 to 40 parts by weight.

Preferably, the xylene-soluble fraction (B) is a copolymer of ethylene with propylene, optionally containing small proportions of a diene, containing more than 20% by weight of ethylene-derived units and preferably having an intrinsic viscosity of from 1.5 to 4 dl/g. The amount of xylene-soluble fraction (B) is preferably of from 50 to 80, more preferably from 60 to 70, parts by weight.

Examples of the above said CH₂=CHR^{I} α-olefins are butene-1; pentene-1; 4-methylpentene-1; hexene-1 and octene-1. The diene, when present in fraction (B), is preferably in amount of from 0.5 to 10% by weight with respect to the weight of (B).
Examples of dienes are butadiene; 1,4-hexadiene; 1,5-hexadiene and ethylidene-norbornene-1.

As mentioned above, the heterophasic compositions are modified by grafting with polybutadienes functionalized with -Si(OR)₃ groups in which R is a linear hydrocarbon radical preferably having from 1 to 3 carbon atoms and is more preferably methyl. Polybutadienes having a content of 1,2 structure of at least 10% and preferably from 10 to 90% are preferably used. Liquid polybutadienes having a molecular weight of from 1800 to 8000 are moreover preferred. Polybutadienes having various degrees of functionalization can also be used. In particular, the content of -Si(OR)₃ groups in the said polymers can range from 1 to 10%. An example of products which can be used is represented by the products known as Polivest® 25 and Polivest® 90 sold by Hüls. Both of these products are low-molecular-weight polybutadienes that are liquid at room temperature, functionalized with various amounts of trimethoxysilyl groups (2-2.5% for Polivest 25 and 8.5-8.6% for Polivest 90).

The amount of polybutadiene which is grafted onto the heterophasic composition can vary within a wide range; generally, this amount is of from 3 to 15% by weight and is preferably from 6 to 9% by weight.

The compositions of the invention can be expediently prepared by means of a reactive conversion process carried out in the presence of a radical initiator.

The process of the invention comprises a heat treatment, at temperatures in the range 150-250°C, to which the heterophasic polyolefin compositions are subjected in the presence of polybutadienes containing -Si(OR)₃ groups and of radical initiators.

The radical initiators can be of the peroxide or non-peroxide type. The initiators of non-peroxide type used in the process of the invention can be chosen, for example, from alkyl 1,2-diphenylethane derivatives and silylbenzopinacol derivatives. Good results are obtained using 2,3-dimethyl-2,3-diphenylbutane (sold under the name Interox CCDFB by the company Peroxyd Chemie) or using 3,4-dimethyl-3,4-diphenylhexane (sold under the name Interox CCDHF by the company Peroxyd Chemie) and 1,3- and 1,4-diisopropylbenzene oligomers.

It is, however, also possible to use radical initiators of the peroxide type, preferably having a half-life of about 10-200 seconds in the temperature range in which the grafting normally takes place.

The amounts of non-peroxide radical initiator to be used in the process of the invention can vary within a wide range depending on the desired effect, and are generally of from 0.05 to 3% by weight of the polymer, preferably from 0.1 to 1% by weight. Generally, the amounts of peroxide initiator used are of from 0.1 to 1%.

The process of the invention can also be carried out in the presence of antioxidants and stabilizers.

Any primary or secondary antioxidant conventionally used can be used as antioxidant. In particular, mention may be made of sterically hindered phenols, preferably 2,6-di-t-butyl-4-methylphenol (BHT), secondary aromatic amines, thioethers, phosphites, phosphonites, zinc dithiobutylcarbamate and mixtures thereof. Synergistic combinations of BHT with 2,2'-thiodiethyl-bis[3-(3,5-di-tert-butyl-4-hydroxyphenyl) propionate] and/or with phosphites and phosphonites can also advantageously be used.

The antioxidants are generally used in an amount not greater than 2% by weight, preferably of from 0.01 to 1% by weight of the polymer.

Other additives such as UV stabilizers, nucleating agents, lubricants, flame-retardants, etc. can also be present in addition to these compounds.

The modification process by grafting with functionalized polybutadienes takes place at temperatures in the range of 150-250°C, preferably in the range of 190-230°C.

The grafting can be carried out by heating to the temperatures indicated for a period generally of from 0.1 to 20 minutes, preferably from 0.5 to 10 minutes, working in a common closed mixer, for example a Banbury-type mixer, or preferably in an extruder.

According to one of the preferred embodiments, the individual components are premixed separately before being fed into the extruder. In this case, the heterophasic composition is added to the mixer first, followed by the optional additives, then the radical initiator and lastly the functionalized polybutadiene are added. The mixture thus prepared is then fed into the extruder.

According to another procedure, the premixing stage is omitted and the various components are fed directly into the extruder simultaneously or, preferably, separately. A particularly preferred embodiment consists in initially feeding the heterophasic component into the extruder together with the radical initiator and other optional additives, followed by feeding in the functionalized polybutadiene.

According to another embodiment, the heterophasic compositions, the functionalized polybutadiene and the optional additives can be fed into the extruder after they have been hot-premixed, while the peroxide is fed into the extruder subsequently, as such or in the form of a master batch.

According to a further embodiment, the heterophasic compositions can be subjected to a preliminary degradation reaction in the presence of the radical generators mentioned above, and the functionalized polybutadiene is then added to the product thus obtained, this mixture undergoing the grafting reaction at temperatures of from 150 to 250°C.

As described above, the compositions of the invention can be used in various fields of application in which, in all cases, good adhesiveness is required, such as, for example, in the field of coatings.

In particular, the compositions of the invention have shown excellent properties of adhesion to metal surfaces. These properties, combined with excellent stability in acidic medium, make the said compositions particularly suitable for use in the field of Pb-acid type dipolar batteries, as a raw material both for the preparation of the lead electrode holders and for the final sealing frame which acts also as a container for the electrode assembly. In point of fact, the examples given below show that the compositions of the invention are characterized by an excellent degree of adhesion to the electrode plate and by excellent stability both in acidic medium and under the anodic conditions.

The examples which follow are given purely as non-limiting illustrations of this invention.

### EXAMPLES

The properties indicated were determined according to the following methods:
- Composition of the polymers: percentage by weight of the various monomers determined by I.R.;
- Insolubility in xylene: 2 g of polymer are dissolved in 250 cm³ of xylene at 135°C with stirring. After 20 minutes, the solution is allowed to cool, while the stirring is continued, to a temperature of 25°C. After 30 minutes, the insoluble polymer precipitated is separated out by filtration. The solvent is removed from the solution by evaporation in a stream of nitrogen and the residue is dried under vacuum at 80°C until a constant weight is obtained. In this way, the percentage of polymer which is soluble in xylene at 25°C is calculated, and the percentage of insoluble polymer is consequently determined;
- Melt index L (MIL): ASTM D 1238, condition L;
- Stability in acidic medium: a test piece obtained from the composition according to the invention is immersed in a sulphuric acid solution (d=1.280 g/cm³) for a period of 72 hours at room temperature (25°C).
- Degree of adhesion to the plate: a polymer layer consisting of the compositions according to the present invention is made to adhere, by compression moulding, to one side of a test piece consisting of a lead plate which has been sandblasted beforehand. The test piece is subjected to a bending action, with evaluation of any degree of delamination, followed by a test of delamination by tearing, carried out by acting simultaneously on the lead plate and on the polymer layer.
- Stability under the anodic conditions: each test piece, obtained as described above, is made to work as an anode, interfaced with a pure lead counter-electrode in a sulphuric acid solution (d=1.280 g/cm³) under the following experimental conditions: I = 25 mA/cm², room temperature, 72 hours, 3 cm gap between the electrodes. The side of the plate to which the polymer layer adheres acts as the anode and, in the case of perfect adhesion of the polymer, the plate does not undergo any oxidation (total absence of darkening caused by formation of PbO₂) on the polymer-protected side.

### EXAMPLE 1

### Preparation of a heterophasic polyolefin composition grafted with polybutadienes

0.5 part of Irganox 1035, 0.6 part of Trigonox 101-50D-pd, 10 parts of Polivest 90 and 100 parts of a heterophasic polyolefin composition comprising (A) 35% of a xylene-insoluble fraction containing a propylene-ethylene copolymer containing about 3% ethylene; and
(B) 65% of a xylene-soluble fraction containing an ethylene-propylene copolymer, containing about 30% ethylene, are introduced into a paddle-stirrer. The mixing, carried out at low speed, was continued for about 1 minute after the addition of the Polivest 90 (last component). The composition thus obtained was then fed laterally into a "Werner ZSK 40" type twin-screw extruder (40 mm screw diameter; L/D ratio 10:1) and extruded at a temperature of 220°C.

### EXAMPLE 2

The test pieces obtained from the composition prepared according to Example 1 were tested, according to the procedures given above, in order to evaluate their performance in terms of stability in acidic medium, degree of adhesion to the plate and stability under the anodic conditions. The test results are given in Table 1.

### EXAMPLE 3

0.45 part of Irganox 1035, 0.18 part of Irganox 101/50/DpD and 96.37 parts of a heterophasic polyolefin composition as described in Example 1 are introduced, by means of a K-tron single-screw metering machine, into a Buss 70 co-Kneader, in the first hopper. The mixture is melted and 3 parts of Polivest 25 are then introduced, by means of a liquid-metering device. The composition thus obtained is then extruded at a temperature of 220°C.

### EXAMPLE 4

The test pieces obtained from the composition prepared according to Example 3 were tested, according to the procedures given above, in order to evaluate their performance in terms of stability in acidic medium, degree of adhesion to the plate and stability under the anodic conditions. The test results are given in Table 1.

**TABLE 1**

| **Example** | **Stability in acidic medium** | **Adhesion to the plate** | **Stability under anodic working conditions** |
|---|---|---|---|
| 2 | no deterioration | excellent tear strength | no detachment of the polymer or visible deterioration of the Pb |
| 4 | no deterioration | good tear strength | no detachment of the polymer or visible change of the Pb |

## Claims

1. Heterophasic polyolefin compositions comprising:
(A) 10-60 parts by weight of a fraction which is insoluble in xylene at room temperature, comprising a propylene homopolymer and/or a copolymer of propylene with ethylene and/or another α-olefin CH₂=CHR^{I}, where R^{I} is an alkyl radical having 2-10 carbon atoms, containing more than 85% by weight of propylene-derived units; and
(B) 40-90 parts by weight of a fraction which is soluble in xylene at room temperature, comprising a predominantly amorphous copolymer of propylene with ethylene and/or another α-olefin CH₂=CHR^{I}, where R^{I} has the meaning described above, optionally containing small amounts of a diene, containing more than 15% by weight of ethylene-derived units;
the said compositions being characterized in that they are grafted with polybutadienes containing -Si(OR)₃ groups in which R is a hydrocarbon radical having from 1 to 5 carbon atoms.

2. Composition according to Claim 1, in which the xylene-insoluble fraction (A) is a propylene homopolymer and/or a copolymer of propylene, preferably with ethylene, containing more than 90% by weight of propylene-derived units.

3. Composition according to Claim 1, in which the xylene-soluble fraction (B) is a copolymer of ethylene with propylene, optionally containing small proportions of a diene, containing more than 20% by weight of ethylene-derived units and preferably having an intrinsic viscosity of between 1.5 and 4 dl/g.

4. Composition according to Claim 1, in which the polybutadienes have a content of 1,2 structure of at least 10% and preferably of from 10 to 90%.

5. Compositions according to Claim 1, in which the polybutadienes are liquid at room temperature and have a molecular weight of from 1800 to 8000.

6. Compositions according to Claim 1, in which the polybutadienes have a content of -Si(OR)₃ groups of from 1 to 10%.

7. Compositions according to Claim 1, in which the amounts of grafted polybutadiene are of from 3 to 15% by weight and preferably from 6 to 9% by weight.

8. Process for the preparation of the compositions according to one or more of the preceding claims, comprising subjecting the heterophasic polyolefin compositions, comprising the components (A) and (B) as defined in Claim 1, to a heat treatment at temperatures in the range 150-250°C in the presence of polybutadienes containing -Si(OR)₃ groups, in which R is a hydrocarbon radical having from 1 to 5 carbon atoms, and radical initiators.

9. Process according to Claim 8, in which the radical initiator is of non-peroxide type and is chosen from the group consisting of alkyl 1,2-diphenylethane derivatives and silylbenzopinacol derivatives.

10. Use of the heterophasic polyolefin compositions according to one or more of Claims 1-7 in the production of Pb-acid type bipolar batteries.
